# FASCICULE DE BREVET EUROPEEN

(11) **EP 2 795 845 B1**
(45) Date de publication et mention de la délivrance du brevet: **04.05.2016**
(21) Numéro de dépôt: 12819078.2
(22) Date de dépôt: 14.12.2012
(51) Int. Cl.: H04L 12/28

(54) **SYSTEME DE CONTROLE POUR JOUER UN FLUX DE DONNEES SUR UN DISPOSITIF RECEPTEUR**
STEUERSYSTEM ZUR WIEDERGABE EINES DATENSTROMS AUF EINER EMPFANGSVORRICHTUNG
CONTROL SYSTEM FOR PLAYING A DATA STREAM ON A RECEIVING DEVICE

(30) Priorité: 23.12.2011 FR 1162444
(43) Date de publication de la demande: 29.10.2014
(60) Demande divisionnaire: 16161246.0
(73) Titulaire: Orange, 75015 Paris (FR)
(72) Inventeur: CAZOULAT, Renaud, 35760 Saint Grégoire (FR); CONAN, Martin, F-35510 Cesson Sevigne (FR); CAPDEVIELLE, Marc, F-35510 Cesson Sevigne (FR)
(86) Numéro de dépôt international: PCT/FR2012/052948
(87) Numéro de publication internationale: WO 2013/093310

(56) Documents cités:
- EP-A1- 1 819 101
- US-A1- 2011 116 124
- MONICA FERNANDEZ ET AL: "Empowering UPnP/DLNA for IPTV services", INTERNET COMMUNICATIONS (BCFIC RIGA), 2011 BALTIC CONGRESS ON FUTURE, IEEE, 16 février 2011 (2011-02-16), pages 7-12, XP031983047, DOI: 10.1109/BCFIC-RIGA.2011.5733207 ISBN: 978-1-4244-8511-6
- ALLEGRO SOFTWARE DEVELOPMENT CORPORATION: "Networked Digital Media Standards. A UPnP / DLNA Overview", INTERNET CITATION, 26 octobre 2006 (2006-10-26), page 25PP, XP007906876, Extrait de l'Internet: URL:http://www.allegrosoft.com/downloads/U PnP_DLNA_White_Paper.pdf [extrait le 2009-01-20]

## Description

La présente invention concerne un système de contrôle pour jouer un flux de données.

Les boitiers de décodage vidéo numériques, couramment appelés Set-Top-Box (STB), permettent d'accéder à des contenus vidéo tels des programmes télévisuels ou des contenus vidéos de type VOD (Video On Demand - Vidéo à la demande), à travers un réseau de transmission numérique (par Internet, satellite ou TNT par exemple).

Les STB peuvent en outre intégrer d'autres fonctions :
- un disque dur permettant d'enregistrer un programme durant une plage horaire prédéfinie ou à la volée afin de permettre à un utilisateur de mettre le programme TV courant en pause et de le visionner ultérieurement ;
- un accès à l'Internet ;
- un service de diffusion de radio Web ;
- un support DLNA permettant de naviguer dans un gestionnaire de fichiers d'un ordinateur jouant un rôle de serveur DLNA et de jouer un contenu stocké sur l'ordinateur ;
- etc.

Ces nombreuses fonctions rendent complexe l'utilisation de la STB. Pour utiliser une fonction, un utilisateur doit naviguer dans une interface graphique s'affichant sur l'écran d'un téléviseur à l'aide d'une télécommande spécifique. Compte tenu des contraintes de lisibilité induites par l'affichage sur un écran TV et des contraintes liées à l'utilisation d'une télécommande pour naviguer dans l'interface graphique, celle-ci manque souvent de simplicité et de confort d'utilisation. En outre, toutes ces fonctions augmentent le coût de la STB.

La présente invention vise à améliorer la situation.

A cet effet, elle concerne un système de contrôle pour jouer un flux de données comprenant
- des moyens d'interface utilisateur pour permettre à un utilisateur de sélectionner un flux de données à jouer,
- des moyens de réception du flux de données à jouer,
- des moyens de transmission du flux de données reçu à travers des moyens de sortie externe vers un dispositif apte à jouer le flux,
caractérisé par le fait qu'il comprend un premier et un deuxième dispositif, distincts l'un de l'autre,
- le premier dispositif, dit dispositif récepteur, intégrant les moyens de réception du flux de données et les moyens de transmission du flux reçu à travers les moyens de sortie externe et
- le deuxième dispositif, dit dispositif de contrôle, intégrant les moyens d'interface utilisateur et comprenant des moyens pour, suite à la sélection par un utilisateur d'un flux à jouer, transmettre au premier dispositif une commande pour jouer le flux sélectionné, ladite commande contenant des données de localisation du flux sélectionné.

L'invention consiste donc à séparer les moyens d'interface utilisateur permettant de sélectionner le flux à jouer et les moyens pour gérer le flux de données (c'est-à-dire pour le recevoir et le retransmettre vers un dispositif apte à le jouer) dans deux dispositifs distincts, un dispositif de contrôle et un dispositif récepteur respectivement. Le dispositif de contrôle obtient l'adresse de localisation du flux à jouer et la transmet au dispositif récepteur qui n'a plus qu'à récupérer le flux à l'adresse fournie. Le dispositif de contrôle peut offrir une interface utilisateur conviviale, sans les contraintes d'affichage et de navigation sur un écran de téléviseur. En outre, le dispositif récepteur peut être techniquement le plus simple possible, sans moyens d'interface utilisateur pour sélectionner le flux à jouer, ce qui limite son coût. Selon l'invention, toute l'interactivité entre l'utilisateur et l'interface utilisateur pour sélectionner le flux est réalisée au niveau du dispositif de contrôle.

Avantageusement, le premier dispositif comprend des moyens pour établir une connexion sans fil directe avec le deuxième dispositif de connexion et recevoir des données de connexion à un point d'accès sans fil et le deuxième dispositif comprend des moyens d'assistance de connexion du premier dispositif à un point d'accès sans fil, agencés pour afficher une interface graphique de saisie de données de connexion du premier dispositif à un point d'accès sans fil et pour transmettre lesdites données de connexion saisies au premier dispositif.

.Le premier dispositif peut être adapté pour simuler un point d'accès sans fil. Le deuxième dispositif peut alors de connecter directement au premier dispositif. Grâce à cela, le dispositif récepteur peut être dépourvu de moyens d'interface utilisateur pour saisir les données requises pour se connecter à un point d'accès sans fil.

Les moyens de sélection d'un flux peuvent comprendre des moyens d'affichage de données d'interface graphique, des moyens agencés pour accéder à une interface utilisateur de sélection de contenus sur un serveur distant et/ou des moyens agencés pour accéder à un gestionnaire de fichiers sur un serveur de stockage d'un réseau local auquel le premier et le deuxième dispositif appartiennent.

Les données d'interface utilisateur peuvent comprendre des données d'interface graphique stockées dans le dispositif de contrôle ou des données provenant d'un serveur distant ou d'un serveur local.

Avantageusement, le premier dispositif est dépourvu de moyens de sélection par un utilisateur d'un flux de données vidéo à jouer. Toute l'interface utilisateur permettant la sélection d'un flux à jouer est ainsi située sur le deuxième dispositif.

L'invention concerne aussi un dispositif récepteur pour le système précédemment défini, comprenant des moyens de réception d'un flux de données vidéo à jouer, des moyens de sortie vidéo vers un dispositif externe apte à jouer le flux reçu, des moyens de transmission du flux de données vidéo reçues à travers les moyens de sortie vidéo, des moyens de réception d'une contrôle pour jouer un flux, ladite contrôle contenant une adresse de localisation du flux.

L'invention concerne également un dispositif contrôle pour le système de la revendication 1, comprenant des moyens d'interface utilisateur pour permettre à un utilisateur de sélectionner un flux de données à jouer et des moyens pour, suite à la sélection par un utilisateur d'un flux à jouer, transmettre vers un autre dispositif une commande pour jouer le flux sélectionné, ladite commande contenant une adresse de localisation du flux sélectionné.

L'invention concerne encore un procédé de contrôle pour jouer un flux de données, comprenant
- une étape de sélection d'un flux de données à jouer à l'aide de moyens d'interface utilisateur,
- une étape de réception du flux de données à jouer,
- une étape de transmission du flux de données reçu vers un dispositif apte à jouer le flux,
caractérisé par le fait que
- les étapes de réception d'un flux de données à jouer et de transmission du flux de données reçu vers un dispositif apte à jouer ledit flux sont réalisées par un premier dispositif, dit dispositif récepteur ;
- l'étape de sélection d'un flux de données à jouer est réalisée par un deuxième dispositif, dit dispositif de contrôle, distinct du premier dispositif,
- et il est prévu une étape de transmission par le deuxième dispositif au premier dispositif, suite à la sélection par un utilisateur d'un flux à jouer, d'une commande pour jouer le flux sélectionné, ladite commande contenant des données de localisation du flux sélectionné.

L'invention sera mieux comprise à l'aide de la description suivante d'une forme de réalisation particulière du système de contrôle de l'invention en référence aux dessins annexés sur lesquels
- La figure 1 représente une vue schématique du système selon une forme de réalisation particulière de l'invention ;
- La figure 2 représente un schéma bloc fonctionnel du dispositif récepteur du système de la figure 1 ;

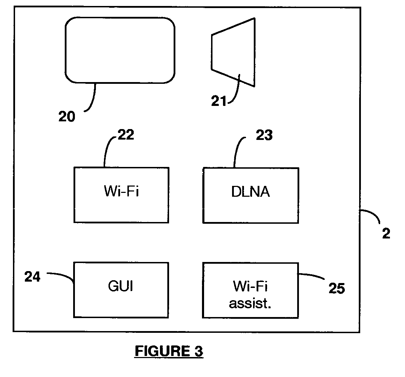

- La figure 3 représente un schéma bloc fonctionnel du dispositif de contrôle du système de la figure 1
- La figure 4 représente un organigramme des étapes de procédé mises en oeuvre pour connecter le dispositif récepteur de la figure 1 à une passerelle ;
- Les figures 5A et 5B représentent les étapes de procédé mises en oeuvre lors du fonctionnement du système de la figure 1, selon deux exemples de réalisation particuliers.

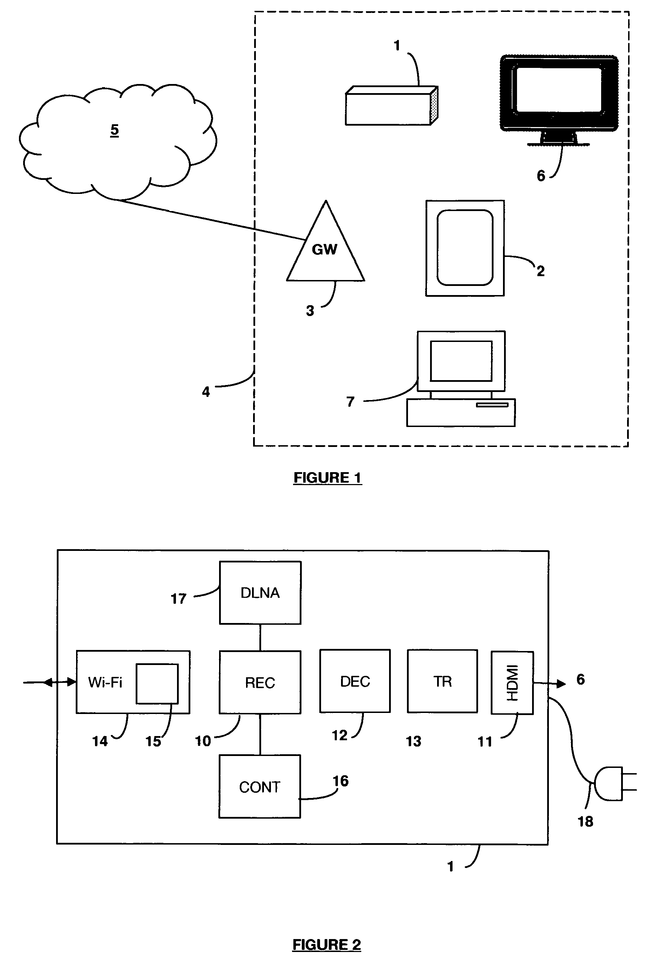

Le système représenté sur la figure 1 comprend un premier dispositif 1, dit récepteur, et un deuxième dispositif 2, dit de contrôle, distincts l'un de l'autre.

Le dispositif récepteur 1 et le dispositif de contrôle 2 appartiennent à un réseau local 4 géré par une passerelle 3, en l'espèce un point d'accès WI-Fi.

La passerelle 3 est connectée à un réseau externe de communication, ici l'Internet 5, par exemple par l'intermédiaire d'une ligne ADSL (*Asymmetric Digital Subscriber Line - liaison numérique asymétrique*).

Le réseau local 4 comprend également un ordinateur personnel, ou PC (Personal Computer), 7 et un dispositif de restitution multimédia 6, par exemple ici un téléviseur à écran plat.

Le dispositif récepteur 1, le dispositif de contrôle 2 et l'ordinateur 7 sont connectés à la passerelle 3, par une liaison sans fil, ici une liaison Wi-Fi. On pourrait envisager une connexion filaire entre les appareils du réseau local 4 (1, 2 et/ou 7) et la passerelle 3. Le dispositif récepteur 1 est connecté au dispositif de restitution multimédia 6, ici par des connecteurs HDMI.

Le dispositif récepteur 1, le dispositif de contrôle 2, le dispositif de restitution multimédia 6 et le PC 7 forment un réseau local DLNA. Le standard DLNA (Digital Living Network Alliance) définit différents acteurs :
- le serveur : stocke et fournit à la demande les contenus numériques ;
- le « renderer » : décode les contenus numériques pour pouvoir les jouer ;
- le « player » : joue les contenus décodés ;
- le contrôleur : permet de parcourir les contenus proposés par les serveurs et de les faire jouer par les renderers/players.

Dans l'exemple particulier décrit ici, des acteurs DLNA sont installés sur les appareils du réseau DLNA de la façon suivante :
- le dispositif récepteur 1 joue un rôle de renderer DLNA ;
- le dispositif de contrôle 2 joue un rôle de renderer/player DLNA, de serveur DLNA et de contrôleur DLNA ;
- le PC 7 joue un rôle de serveur DLNA et
- le dispositif de restitution multimédia 6 joue un rôle de player DLNA.

On va maintenant décrire de façon plus détaillée le dispositif récepteur 1. En référence à la figure 2, ce dispositif récepteur 1 comprend
- un module 10 de réception d'un flux de données à jouer,
- une interface de sortie 11 vers un dispositif externe apte à jouer le flux reçu ;
- un module 12 de décodage du flux de données reçu ;
- un module 13 de retransmission du flux de données, reçu et décodé, à travers l'interface de sortie 11 ;
- un module de communication sans fil, ici Wi-Fi, 14, intégrant un sous-module 15 de connexion Wi-Fi à un point d'accès WI-Fi ;
- un module 16 de contrôle de réception d'un flux de données; et
- un module DLNA 17.

Le module de contrôle 16 est agencé pour, sur réception d'un message de commande en provenance d'un dispositif de contrôle (par exemple le dispositif de contrôle 2), interpréter le message de commande et transmettre au module de réception 10 une commande pour récupérer un flux de données à jouer à une adresse de localisation indiquée dans le message de commande. Il peut s'agir d'une adresse sous la forme d'une URL, comportant une adresse IP multicast (dans le cas d'un flux TV), une adresse IP unicast (dans le cas d'un flux de VOD), d'une adresse de stockage sur un serveur ou un dispositif de stockage (dans le cas d'un contenu stocké dans un serveur local ou distant).

Le module de réception 10 est agencé pour, sur réception d'une commande pour récupérer un flux de données, la commande contenant une adresse de localisation du flux, récupérer le flux considéré à l'adresse de localisation reçue.

Le module de décodage 12, connecté en entrée au module de réception 10 et en sortie au module de retransmission 13, est agencé pour décoder un flux de données reçu par le module de réception 10 de manière à ce qu'il puisse être joué par un dispositif de restitution externe apte à jouer le contenu, par exemple le dispositif de restitution multimédia 6. Le décodage comprend un déchiffrement du flux, si celui-ci est sous forme chiffrée, une décompression du flux, si celui-ci est sous forme compressée, et une conversion de format afin de convertir le format des données du flux reçu en un format compatible avec l'interface de sortie vidéo (ici HDMI - High Definition Multimedia Interface).

Le module de retransmission 13, connecté en entrée au module de décodage 12 et en sortie à l'interface de sortie 11, est agencé pour retransmettre un flux de données à jouer, après décodage, à travers l'interface de sortie 11, vers un dispositif externe apte à jouer, c'est-à-dire à restituer, le flux. Ce dispositif externe peut par exemple être le dispositif de restitution multimédia 6.

L'interface de sortie 11 comprend ici un connecteur HDMI (High-Definition Multimedia Interface) mâle.

Le module de communication Wi-Fi 14 est agencé pour mettre en oeuvre le protocole de communication Wi-Fi afin de communiquer en Wi-Fi avec d'autres dispositifs. Le sous-module de connexion Wi-Fi 15 est agencé pour connecter le dispositif récepteur 1 à un point d'accès Wi-Fi en utilisant le mode de fonctionnement Wi-Fi ad hoc, comme cela sera décrit plus loin dans la description du procédé.

Le module DLNA 17 est agencé pour mettre en oeuvre le standard DLNA de manière à interagir, en tant que renderer DLNA, avec d'autres acteurs DLNA du réseau local 4, par l'intermédiaire de la passerelle 3. Ce module DLNA est agencé pour commander l'obtention d'un flux de données sur un serveur DLNA, son décodage et sa restitution, selon les protocoles définis par le standard DLNA.

Les modules 10, 12, 13, 16, 17 sont des modules applicatifs (ou logiciels).

Le dispositif récepteur 1 comprend en outre un câble 18 muni d'une prise d'alimentation et un module central de commande, non représenté, auquel tous les éléments du dispositif 1 sont connectés et agencé pour contrôler le fonctionnement de ces éléments.

On soulignera que le dispositif récepteur 1 est dépourvu de moyens d'interface utilisateur pour permettre à un utilisateur de sélectionner un flux à jouer.

Le dispositif de contrôle 2 est ici une tablette numérique tactile, par exemple un iPad©. La tablette 2 comprend, de façon classique, un écran d'affichage tactile 20, des moyens de restitution sonore 21, un module 22 de communication sans fil, ici Wi-Fi, et un module DLNA 23. Elle est apte à décoder et jouer un flux de données (vidéo, audio, image), récupéré à travers l'Internet, sur un dispositif de stockage du réseau local 4 ou stocké dans une mémoire propre à la tablette 2.

Elle comprend en outre un module applicatif 24 d'interface utilisateur déportée pour un dispositif récepteur tel que le dispositif 1 et un module applicatif 25 d'assistance à la connexion d'un dispositif récepteur, tel que le dispositif 1, à un point d'accès Wi-Fi. Le module d'interface utilisateur 24 permet de mettre en oeuvre sur la tablette 2 une interface utilisateur GUI pour sélectionner un flux de données à jouer et pour réaliser diverses actions sur ce flux (pause, stop, avance ou retour rapide).

Le flux de données à jouer peut correspondre par exemple à un programme télévisuel diffusé par une chaîne TV, à une vidéo à la demande ou à un contenu (vidéo, audio ou image) stocké dans un dispositif du réseau local 4 (par exemple la tablette 2 ou le PC 7) ou fourni par un serveur Web. Les flux de données sont accessibles auprès de différentes sources et peuvent être sélectionnés au moyen de différentes interfaces utilisateurs. Le module d'interface 24 est agencé pour accéder à ces différentes interfaces utilisateurs de sélection et pour les afficher sur l'écran tactile de la tablette 2. Les données d'interface utilisateur de sélection peuvent être stockées localement dans la tablette 2 ou être accessibles à travers un réseau (en l'espèce l'Internet ou le réseau local 4) auprès d'un serveur ou d'un dispositif de stockage.

Dans l'exemple particulier décrit ici, le module d'interface 24 est agencé pour proposer à un utilisateur, par affichage d'une interface graphique sur l'écran de la tablette 2, différentes rubriques correspondant à différents types de flux: TV, VOD, mes contenus (vidéo, musique, image), YouTube, etc.

Dans l'exemple particulier de la description, sur sélection de l'une de ces rubriques, le module d'interface 24 est agencé pour accéder à une interface graphique utilisateur ou GUI (Graphical User Interface) de sélection et pour l'afficher sur l'écran du dispositif de contrôle 2. Cette interface peut être accessible auprès d'un serveur Web de service de télévision, d'un serveur Web de service de vidéo à la demande (VOD), d'un serveur Web de service YouTube ou d'un dispositif de stockage du réseau local 4.

L'interface GUI de sélection d'un programme TV est fournie par le serveur Web de service de télévision. Elle comprend, de façon connue, un guide électronique de programmes télévisuels permettant d'accéder à une grille des programmes de différentes chaînes de télévision et de sélectionner un programme de télévision à regarder.

L'interface GUI de sélection d'une VOD est fournie par le serveur Web de VOD. Elle comprend, de façon connue, un catalogue de VOD et un moteur de recherche par mots clés. Le catalogue de VOD et le moteur de recherche permettent d'accéder, pour chaque VOD, à une fiche détaillée d'informations et à des commandes activables, ici par un appui tactile sur l'écran 20 du dispositif de contrôle 2, pour notamment visualiser un extrait de VOD ou pour louer une VOD.

L'interface GUI de sélection du service YouTube est accessible auprès d'un serveur Web de service YouTube. Elle comprend, de façon connue, un catalogue de vidéos disponibles sur YouTube et un moteur de recherche par mots clés.

L'interface GUI de sélection de « mes contenus » (vidéo, musique, image) comprend un gestionnaire de fichiers permettant de sélectionner et de lancer la lecture de fichiers stockés sur un dispositif de stockage ici du réseau local 4, ce dispositif jouant un rôle de serveur DLNA. On pourrait envisager d'accéder à un gestionnaire de fichiers stockés sur un dispositif de stockage ou un serveur distant, externe, au réseau local et accessible par l'intermédiaire d'un réseau externe.

En outre, suite à la sélection d'un flux à jouer par un utilisateur et à une commande de l'utilisateur pour jouer ce flux sur le dispositif de restitution 6, le module 24 est agencé pour transmettre au dispositif récepteur 1 une commande « PLAY »pour jouer le flux. La commande PLAY contient l'adresse de localisation du flux à jouer, ici sous la forme d'une URL.

Le module 25 d'assistance à la connexion est agencé pour, sur réception d'une requête de connexion en provenance d'un dispositif récepteur (par exemple le dispositif 1), afficher une interface graphique utilisateur (ou interface GUI) de saisie de données de connexion à un point d'accès Wi-Fi et pour transmettre les données de connexion saisies au dispositif récepteur ayant au point d'accès Wi-Fi.

Le module DLNA 23 est agencé pour mettre en oeuvre le standard DLNA de manière à interagir, en tant que de renderer/player DLNA, de serveur DLNA ou de contrôleur DLNA, avec d'autres acteurs DLNA du réseau local 4, par l'intermédiaire de la passerelle 3. Ce module DLNA est agencé pour commander l'obtention d'un flux de données sur un serveur DLNA, son décodage et sa restitution, pour fournir des flux de données stocké dans la tablette 2, pour permettre de parcourir les contenus stockés dans la tablette et de les faire jouer par les renderers/players, selon les protocoles définis par le standard DLNA.

Le dispositif de restitution multimédia 6 est ici un téléviseur à écran plat équipé d'un connecteur HDMI femelle. Il pourrait s'agir de tout autre dispositif apte à jouer un contenu multimédia (vidéo, audio ou image).

Le PC 7 stocke des contenus multimédia (vidéo, audio, image). Il joue un rôle de serveur DLNA dans le réseau local 4.

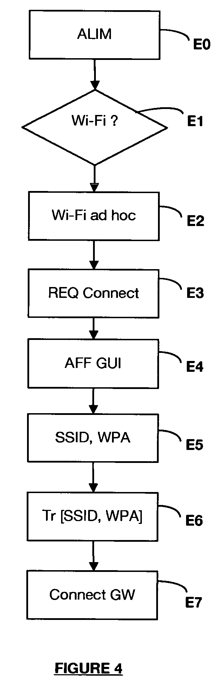

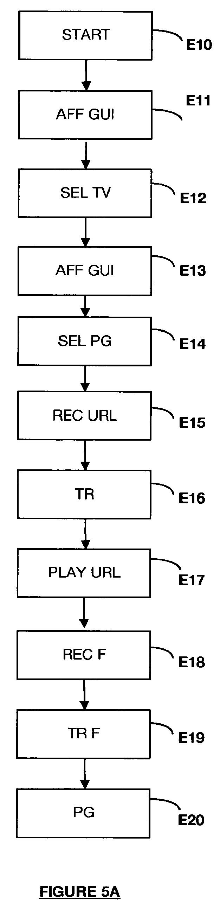

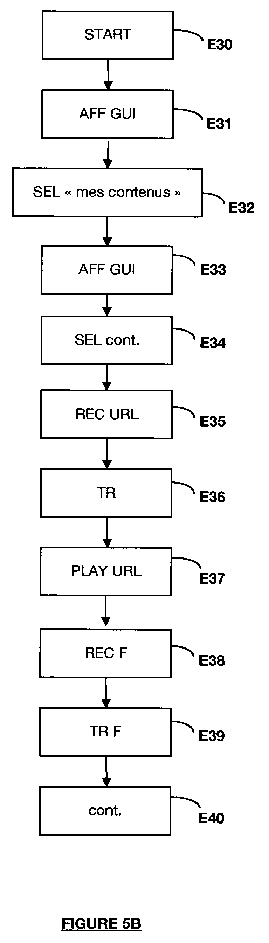

En référence aux figures 4, 5A et 5B, le fonctionnement du système de la figure 1 va maintenant être décrit.

On va d'abord décrire les étapes mises en oeuvre pour connecter le dispositif récepteur 1 à la passerelle 3, sachant que le dispositif 1 est dépourvu de moyens d'interface utilisateur pour permettre à un utilisateur de saisie des données nécessaires de connexion à la passerelle 3. Les étapes exécutées par le dispositif récepteur 1 sont mises en oeuvre par le sous-module de connexion Wi-Fi 15.

Le dispositif récepteur 1 étant dépourvu de moyens d'interface utilisateur, sa connexion à la passerelle 3 s'effectue à l'aide du dispositif de contrôle 2.

Lors d'une étape E0, un utilisateur branche le dispositif récepteur 1 au secteur afin de le mettre en marche.

Lors d'une étape de test E1, le dispositif récepteur 1 vérifie s'il est connecté à un point d'accès Wi-Fi (ou borne Wi-Fi). Aucune connexion Wi-Fi valide n'ayant encore été établie, le test est négatif. Lors d'une étape E2, le dispositif récepteur 1 se met alors en mode de fonctionnement Wi-Fi ad hoc pour établir une connexion directement avec le dispositif de contrôle 2. Le mode Wi-Fi ad hoc consiste, de façon connue, pour le dispositif récepteur 1 à simuler un point d'accès Wi-Fi avec un nom de réseau SSID (Service Set Identifier). Le dispositif de contrôle 2 se connecte au dispositif récepteur 1 directement, en mode Wi-Fi.

Lors d'une étape E3, le dispositif récepteur 1 transmet une requête de connexion à un point d'accès Wi-Fi au dispositif de contrôle 2.

Lors d'une étape E4, sur réception de la requête du dispositif récepteur 1, le dispositif de contrôle 2 affiche une interface utilisateur de saisie d'informations de connexion au point d'accès Wi-Fi local, ou passerelle, 3. L'interface de saisie invite l'utilisateur à saisir les données de connexion nécessaires pour connecter le dispositif récepteur 1 à la passerelle 3. Ces données de connexion comprennent un nom de réseau SSID et une clé de sécurité, ici une clé WPA, associés à la passerelle 3.

Lors d'une étape E5, l'utilisateur saisit les données de connexion requises (SSID et clé WPA associés à la passerelle 3) à l'aide d'un clavier, ici virtuel, du dispositif de contrôle 2 puis valide les données saisies.

Lors d'une étape E6, le dispositif de contrôle 2 transmet les informations de connexion saisies (SSID et clé WPA de la passerelle 3) au dispositif récepteur 2 qui les enregistre en mémoire.

Lors d'une étape E7, le dispositif récepteur 1 se connecte à la passerelle 3, en mode Wi-Fi, à l'aide des informations de connexion fournies par le dispositif de contrôle 2.

Une fois le dispositif récepteur 1 connecté à la passerelle 3, il interrompt le mode de fonctionnement Wi-Fi ad hoc. La connexion Wi-Fi directe entre le dispositif récepteur 1 et le dispositif de contrôle 2 est alors interrompue.

Les étapes qui viennent d'être décrites de connexion du dispositif récepteur 1 à la passerelle 3 sont mises en oeuvre à chaque fois qu'aucune connexion Wi-Fi valide à un point d'accès Wi-Fi n'est détectée, autrement dit dans les deux cas suivants :
- à la première connexion à un point d'accès Wi-Fi (comme décrit précédemment) et
- dans une nouvelle zone de couverture Wi-Fi, lorsque le dispositif récepteur 1 est déplacé dans la zone de couverture d'un nouveau point d'accès Wi-Fi (en dehors de la zone couverte par le point d'accès Wi-Fi préalablement enregistré).

Le dispositif récepteur 2 mémorise les données de connexion des différents points d'accès auquel il se connecte, afin de pouvoir s'y reconnecter automatiquement le cas échéant. Lorsque le dispositif récepteur 2 se trouve dans la zone de couverture de deux points d'accès wifi enregistrés, il se connecte au point d'accès ayant le signal radio le plus fort.

La tablette 2 se connecte également en Wi-Fi à la passerelle 3, de façon connue.

Une fois connectés en Wi-Fi à la passerelle 3, le dispositif récepteur 1 et le dispositif de contrôle 2 peuvent communiquer l'un avec l'autre par l'intermédiaire de la passerelle 3.

On va maintenant décrire les étapes mises en oeuvre par le système pour sélectionner et jouer un flux de données sur le dispositif de restitution multimédia 6, pour deux exemples de réalisation.

Dans un premier exemple de réalisation, le flux à jouer est un programme TV.

Lors d'une étape E10, un utilisateur lance sur le dispositif de contrôle 2 l'application d'interface 24 pour sélectionner un flux à jouer.

Lors d'une étape E11, le dispositif de contrôle 2 affiche une interface graphique permettant à l'utilisateur de sélectionner l'une des rubriques suivantes : TV, VOD, YouTube, mes contenus (vidéo, musique, image/photo).

Lors d'une étape E12, l'utilisateur sélectionne l'une des rubriques sur le dispositif de contrôle 1. Selon le premier exemple de réalisation, l'utilisateur sélectionne la rubrique TV. Lors d'une étape E13, le dispositif de contrôle 1 affiche sur son écran une interface de sélection de programmes TV, accessibles auprès du serveur Web de service de télévision. L'utilisateur visualise ainsi sur l'écran du dispositif de contrôle 2 la grille des programmes en cours sur différentes chaînes de télévision.

Lors d'une étape E14, l'utilisateur sélectionne l'un des programmes à l'aide du dispositif de contrôle 2, ici par une sélection tactile de ce programme sur l'écran du dispositif 2.

Lors d'une étape E15, suite à la sélection du programme, le dispositif de contrôle 2 reçoit une adresse de localisation du flux sur le réseau de l'Internet. L'adresse de localisation du flux comprend une adresse IP multicast de diffusion du programme TV sélectionné et se présente sous la forme d'une url. Sur réception de l'adresse de localisation du flux sélectionné, le dispositif de contrôle 2 récupère le flux à l'adresse reçue et joue le flux afin de permettre une prévisualisation du flux par l'utilisateur sur le dispositif de contrôle 2.

Lors d'une étape E16, l'utilisateur réalise une action spécifique, par exemple une sélection tactile d'un icône de commande ou un geste tactile prédéfini sur l'écran du dispositif de contrôle 2, pour commander un transfert de la lecture du programme TV sélectionné sur le dispositif de restitution multimédia 6. Le dispositif de contrôle 1 transmet alors au dispositif récepteur 1, lors d'une étape E17, une commande « PLAY » pour jouer le programme sélectionné. La commande contient l'adresse de localisation du flux de données de programme TV à jouer.

Lors d'une étape E18, sur réception de la commande, le dispositif récepteur 1 interprète la commande PLAY reçue et récupère le flux de programme TV sélectionné en utilisant l'adresse de localisation reçue dans la commande.

Lors d'une étape E19, le dispositif récepteur 1 reçoit le flux de programme TV, le décode et le transmet pour restitution à travers l'interface de sortie HDMI vers le dispositif de restitution multimédia 6.

Lors d'une étape E20, le dispositif de restitution multimédia 6 joue le programme TV.

Le dispositif de contrôle 2 permet également à l'utilisateur de transmettre d'autres commandes au dispositif récepteur 1, telles que notamment « PAUSE » pour mettre en pause un flux en cours de lecture, « STOP » pour un arrêt de la lecture du flux, une commande « FASTFORWARD N » pour lire en accéléré de N fois le flux, « FASTBACKFORWARD N » pour lire le flux en arrière en accéléré de N fois.

Dans un deuxième exemple de réalisation, le flux de données à jouer est un contenu vidéo stocké localement dans le PC 7. Dans cet exemple de réalisation, le PC 7 joue le rôle de serveur DLNA, le dispositif de contrôle 2 les rôles de contrôle DLNA, de renderer DLNA et de player DLNA, le dispositif récepteur 1 le rôle de renderer DLNA et le dispositif de restitution multimédia 6 le rôle de player DLNA.

Lors d'une étape E30, un utilisateur lance l'application d'interface 24 pour sélectionner un flux à jouer à partir de la tablette 2.

Lors d'une étape E31, le dispositif de contrôle 2 affiche l'interface graphique permettant à l'utilisateur de sélectionner l'une des rubriques suivantes : TV, VOD, YouTube, mes contenus (vidéos, musiques, photos).

Lors d'une étape E32, l'utilisateur sélectionne l'une des rubriques, ici mes contenus, sur le dispositif de contrôle 2.

Lors d'une étape E33, le dispositif de contrôle 2 affiche un gestionnaire de fichiers faisant apparaître une arborescence de fichiers stockés dans un ordinateur 7 et une arborescence de fichiers stockés dans le dispositif de contrôle 2.

Lors d'une étape E34, l'utilisateur sélectionne un fichier à jouer, correspondant par exemple à un contenu vidéo, à l'aide du dispositif de contrôle 2, par une sélection ici tactile du fichier sur l'écran du dispositif 2.

Lors d'une étape E35, suite à la sélection du fichier à jouer, le dispositif de contrôle 2 joue le fichier sélectionné afin de permettre à l'utilisateur de le pré-visualiser.

Lors d'une étape E36, l'utilisateur réalise une action spécifique pour commander la restitution du fichier sélectionné sur le dispositif de restitution 6. Cette action peut être une sélection tactile d'un icône affiché sur l'écran du dispositif de contrôle 2 ou un geste tactile spécifique de l'utilisateur sur l'écran du dispositif de contrôle 2.

Lors d'une étape E37, le dispositif de contrôle 2 transmet au dispositif récepteur 1 une commande DLNA pour jouer le fichier, ou flux de données, sélectionné. La commande transmise contient l'adresse de localisation du fichier sélectionné dans le réseau local DLNA. Par exemple, si l'utilisateur a sélectionné un contenu stocké sur l'ordinateur 7, la commande comporte une adresse URL pointant vers l'emplacement de stockage du fichier correspondant dans l'ordinateur 7.

Lors d'une étape E38, le dispositif récepteur 1 interprète la commande reçue et récupère le flux sélectionné par l'utilisateur auprès de l'ordinateur 7, jouant le rôle de serveur DLNA, à l'aide de l'adresse de localisation reçue.

Lors d'une étape E39, le dispositif récepteur 1 reçoit le flux de données du fichier sélectionné en streaming, c'est-à-dire en continu, le décode et le transmet pour restitution à travers l'interface de sortie HDMI vers le dispositif de restitution multimédia 6.

Lors d'une étape E40, le dispositif de restitution 6 joue le flux reçu, en l'espèce le contenu vidéo stocké sur l'ordinateur 7 faisant fonction de serveur DLNA.

La portée de l'invention n'est pas limitée aux deux exemples de réalisation décrits ci-dessus mais s'étend à tout flux de données, sélectionné à partir de l'interface utilisateur du dispositif de contrôle 2, et reçu par le dispositif récepteur 1 pour être joué sur une dispositif de restitution.

## Revendications

1. Système de contrôle pour jouer un flux de données comprenant :
• un premier dispositif (1), dit dispositif récepteur, comprenant :
- des moyens (10, 16) de réception du flux de données à jouer,
- des moyens (13) de transmission du flux de données reçu à travers des moyens (11) de sortie externe vers un dispositif apte à jouer le flux (16),
• un deuxième dispositif (2), dit dispositif de contrôle, distinct du premier dispositif, intégrant des moyens d'interface utilisateur (24) pour permettre à un utilisateur de sélectionner un flux de données à jouer et comprenant des moyens (24) pour, suite à la sélection par un utilisateur d'un flux à jouer, transmettre au premier dispositif une commande pour jouer le flux sélectionné, ladite commande contenant des données de localisation du flux sélectionné,
**caractérisé par le fait que** le deuxième dispositif (2) est agencé pour décoder et jouer le flux sélectionné et est distinct du dispositif apte à jouer le flux, et que ladite commande est transmise suite à une commande de l'utilisateur pour jouer ledit flux sur le dispositif apte à jouer le flux après prévisualisation sur le deuxième dispositif.

2. Système selon la revendication 1, dans lequel
• le premier dispositif (1) comprend des moyens (14,15) pour établir une connexion sans fil directe avec le deuxième dispositif (2) et recevoir des données de connexion à un point d'accès sans fil (3) et
• le deuxième dispositif (2) comprend des moyens (25) d'assistance de connexion du premier dispositif à un point d'accès sans fil, agencés pour afficher une interface graphique de saisie de données de connexion du premier dispositif à un point d'accès sans fil et pour transmettre lesdites données de connexion saisies au premier dispositif.

3. Système selon la revendication 1, dans lequel le premier dispositif (1) comprend des moyens de décodage (12) agencés pour décoder le flux de données reçu.

4. Système selon la revendication 1, dans lequel les moyens d'interface utilisateur pour permettre à un utilisateur de sélectionner un flux de données à jouer comprennent des moyens d'affichage de données d'interface graphique.

5. Système selon la revendication 1, dans lequel lesdits moyens d'interface utilisateur pour permettre à un utilisateur de sélectionner un flux de données à jouer sont agencés pour accéder à une interface utilisateur de sélection de contenus sur un serveur distant.

6. Système selon la revendication 1, dans lequel, le premier et le deuxième dispositif appartenant à un réseau local géré par un point d'accès sans fil, lesdits moyens d'interface utilisateur pour permettre à un utilisateur de sélectionner un flux de données à jouer sont agencés pour accéder à un gestionnaire de fichiers sur un serveur de stockage du réseau local.

7. Système selon la revendication 1, dans lequel le premier dispositif (1) est dépourvu de moyens d'interface utilisateur pour permettre à un utilisateur de sélectionner un flux de données à jouer.

8. Dispositif récepteur pour le système de la revendication 1, comprennent des moyens (10) de réception d'un flux de données vidéo à jouer, des moyens (11) de sortie externe vers un dispositif apte à jouer le flux reçu, des moyens (13) de transmission du flux de données reçu à travers les moyens de sortie (11), des moyens (16) de réception d'une commande pour jouer un flux, ladite commande contenant une adresse de localisation du flux.

9. Dispositif récepteur selon la revendication 8, **caractérisé en ce qu'**il est dépourvu de moyens d'interface utilisateur pour permettre à un utilisateur de sélectionner un flux de données à jouer.

10. Dispositif de contrôle pour le système de la revendication 1, comprenant des moyens (24) d'interface utilisateur pour permettre à un utilisateur de sélectionner un flux de données à jouer, des moyens pour décoder et jouer le flux sélectionné et des moyens (24) pour, suite à la sélection par un utilisateur d'un flux à jouer, à une prévisualisation sur le dispositif de contrôle du flux sélectionné et à une commande de l'utilisateur pour jouer le flux sélectionné sur un dispositif apte à jouer le flux, transmettre vers un autre dispositif une commande pour jouer le flux sélectionné, ladite commande contenant une adresse de localisation du flux sélectionné.

11. Dispositif de contrôle selon la revendication 10, dans lequel les moyens d'interface utilisateur pour permettre à un utilisateur de sélectionner un flux de données à jouer comprennent des moyens d'affichage de données d'interface graphique.

12. Procédé de contrôle pour jouer un flux de données, comprenant
• une étape (E14 ; E34) de sélection d'un flux de données à jouer à l'aide de moyens d'interface utilisateur,
• une étape (E18 ; E38) de réception du flux de données à jouer,
• une étape (E19 ; E39) de transmission du flux de données reçu vers un dispositif apte à jouer le flux,
• les étapes de réception d'un flux de données à jouer et de transmission du flux de données reçu vers un dispositif apte à jouer ledit flux sont réalisées par un premier dispositif (1), dit dispositif récepteur ;
• l'étape de sélection d'un flux de données à jouer est réalisée par un deuxième dispositif (2), dit dispositif de contrôle, distinct du premier dispositif,
• et il est prévu une étape de transmission (E17 ; E37) par le deuxième dispositif (2) au premier dispositif (1), suite à la sélection par un utilisateur d'un flux à jouer, d'une commande pour jouer le flux sélectionné, ladite commande contenant des données de localisation du flux sélectionné.
**caractérisé par le fait que**
la commande est transmise suite à une prévisualisation du flux sélectionné sur le deuxième dispositif, distinct du dispositif apte à jouer le flux, et à une commande de l'utilisateur pour jouer le flux sélectionné sur le dispositif apte à jouer le flux.

13. Procédé selon la revendication 12, dans lequel
• le premier dispositif (1) établit une connexion sans fil directe avec le deuxième dispositif (E2) et transmet au deuxième dispositif (2) une requête de connexion à un point d'accès sans fil (E3) ;
• le deuxième dispositif (2) affiche une interface graphique de saisie de données de connexion du premier dispositif à un point d'accès sans fil (E4) puis, suite à la saisie de données de connexion à un point d'accès sans fil par un utilisateur (E5), transmet lesdites données de connexion saisies au premier dispositif (E6).

## Patentansprüche

1. Steuersystem zur Wiedergabe eines Datenstroms, umfassend:
• eine erste Vorrichtung (1), die Empfangsvorrichtung, umfassend:
- Mittel (10, 16) zum Empfangen des wiederzugebenden Datenstroms,
- Mittel (13) zum Übertragen des Datenstroms, der durch externe Ausgabemittel (11) empfangen wird, zu einer Vorrichtung, die geeignet ist, den Datenstrom (16) wiederzugeben,
• eine zweite Vorrichtung (2), die Steuervorrichtung, die sich von der ersten Vorrichtung unterscheidet, die Benutzerschnittstellenmittel (24) integriert, um einem Benutzer zu ermöglichen, einen wiederzugebenden Datenstrom auszuwählen, und Mittel (24) aufweist, um, nach der Auswahl durch einen Benutzer eines wiederzugebenden Stroms, an die erste Vorrichtung einen Befehl zu übertragen, um den ausgewählten Strom wiederzugeben, wobei der Befehl Standortdaten des ausgewählten Stroms enthält,
**dadurch gekennzeichnet, dass** die zweite Vorrichtung (2) angeordnet ist, um den ausgewählten Strom zu decodieren und wiederzugeben, und sich von der Vorrichtung unterscheidet, die geeignet ist, den Strom wiederzugeben, und dass der Befehl nach einem Befehl des Benutzers übertragen wird, um den Strom auf der Vorrichtung wiederzugeben, die geeignet ist, den Strom nach der Vorschau auf der zweiten Vorrichtung wiederzugeben.

2. System nach Anspruch 1, wobei
• die erste Vorrichtung (1) Mittel (14, 15) aufweist, um eine direkte drahtlose Verbindung mit der zweiten Vorrichtung (2) herzustellen und Verbindungsdaten zu einem drahtlosen Zugangspunkt (3) zu empfangen und
• die zweite Vorrichtung (2) Hilfsmittel (25) zum Verbinden der ersten Vorrichtung mit einem drahtlosen Zugangspunkt aufweist, die angeordnet sind, um eine grafische Schnittstelle des Erfassens von Verbindungsdaten der ersten Vorrichtung mit einem drahtlosen Zugangspunkt anzuzeigen und um die erfassten Verbindungsdaten an die erste Vorrichtung zu übertragen.

3. System nach Anspruch 1, wobei die erste Vorrichtung (1) Decodierungsmittel (12) aufweist, die angeordnet sind, um den empfangenen Datenstrom zu decodieren.

4. System nach Anspruch 1, wobei die Benutzerschnittstellenmittel, um einem Benutzer zu ermöglichen, einen wiederzugebenden Datenstrom auszuwählen, Mittel zum Anzeigen von Daten einer grafischen Schnittstelle aufweisen.

5. System nach Anspruch 1, wobei die Benutzerschnittstellenmittel, um einem Benutzer zu ermöglichen, einen wiederzugebenden Datenstrom auszuwählen, angeordnet sind, um auf eine Benutzerschnittstelle zum Auswählen von Inhalten auf einem Remote-Server zuzugreifen.

6. System nach Anspruch 1, wobei, wobei die erste und die zweite Vorrichtung einem lokalen Netzwerk angehören, das von einem drahtlosen Zugangspunkt verwaltet wird, die Benutzerschnittstellenmittel, um einem Benutzer zu ermöglichen, einen wiederzugebenden Datenstrom auszuwählen, angeordnet sind, um auf einen Dateimanager auf einem Speicherserver des lokalen Netzwerks zuzugreifen.

7. System nach Anspruch 1, wobei die erste Vorrichtung (1) keine Benutzerschnittstellenmittel aufweist, um einem Benutzer zu ermöglichen, einen wiederzugebenden Datenstrom auszuwählen.

8. Empfangsvorrichtung für das System nach Anspruch 1, umfassend Mittel (10) zum Empfangen eines wiederzugebenden Videodatenstroms, externe Ausgabemittel (11) zu einer Vorrichtung, die geeignet ist, den empfangenen Strom wiederzugeben, Mittel (13) zum Übertragen des Datenstroms, der durch die Ausgabemittel (11) empfangen wird, Mittel (16) zum Empfangen eines Befehls zur Wiedergabe eines Stroms, wobei der Befehl eine Adresse zum Lokalisieren des Stroms aufweist.

9. Empfangsvorrichtung nach Anspruch 8, **dadurch gekennzeichnet, dass** sie keine Benutzerschnittstellenmittel aufweist, um einem Benutzer zu ermöglichen, einen wiederzugebenden Datenstrom auszuwählen.

10. Steuervorrichtung für das System nach Anspruch 1, umfassend Benutzerschnittstellenmittel (24), um einem Benutzer zu ermöglichen, einen wiederzugebenden Datenstrom auszuwählen, Mittel, um den ausgewählten Strom zu decodieren und wiederzugeben und Mittel (24), um nach der Auswahl durch einen Benutzer eines wiederzugebenden Datenstroms, nach einer Vorschau auf der Steuervorrichtung des ausgewählten Stroms und nach einem Befehl des Benutzers zur Wiedergabe des ausgewählten Stroms auf einer Vorrichtung, die geeignet ist den Strom wiederzugeben, an eine andere Vorrichtung einen Befehl zur Wiedergabe des ausgewählten Stroms zu übertragen, wobei der Befehl eine Adresse zum Lokalisieren des ausgewählten Stroms aufweist.

11. Steuervorrichtung nach Anspruch 10, wobei die Benutzerschnittstellenmittel, um einem Benutzer zu ermöglichen, einen wiederzugebenden Datenstrom auszuwählen, Mittel zum Anzeigen von Daten einer grafischen Schnittstelle aufweisen.

12. Steuerverfahren zur Wiedergabe eines Datenstroms, umfassend:
• einen Schritt (E14; E34) zum Auswählen eines wiederzugebenden Datenstroms mit Hilfe von Benutzerschnittstellenmitteln,
• einen Schritt (E18; E38) zum Empfangen des wiederzugebenden Datenstroms,
• einen Schritt (E19; E39) zum Übertragen des empfangenen Datenstroms zu einer Vorrichtung, die geeignet ist, den Strom wiederzugeben, wobei
• die Schritte des Empfangens eines wiederzugebenden Datenstroms und des Übertragens des empfangenen Datenstroms zu einer Vorrichtung, die geeignet ist, den Strom wiederzugeben, durch eine erste Vorrichtung (1), die Empfangsvorrichtung, durchgeführt werden,
• der Schritt des Auswählens eines wiederzugebenden Datenstroms durch eine zweite Vorrichtung (2), die Steuervorrichtung, die sich von der ersten Vorrichtung unterscheidet, durchgeführt wird,
• und ein Schritt des Übertragens (E17; E37) durch die zweite Vorrichtung (2) an die erste Vorrichtung (1) nach der Auswahl durch einen Benutzer eines wiederzugebenden Stroms eines Befehls zur Wiedergabe des ausgewählten Stroms vorgesehen ist, wobei der Befehl Standortdaten des ausgewählten Stroms enthält,
**dadurch gekennzeichnet, dass**
der Befehl nach einer Vorschau des ausgewählten Stroms auf der zweiten Vorrichtung, die sich von der Vorrichtung unterscheidet, die geeignet ist, den Strom wiederzugeben, und nach einem Befehl des Benutzers zur Wiedergabe des ausgewählten Stroms auf der Vorrichtung, die geeignet ist, den Strom wiederzugeben, übertragen wird.

13. Verfahren nach dem Anspruch 12, wobei
• die erste Vorrichtung (1) eine direkte drahtlose Verbindung mit der zweiten Vorrichtung (E2) herstellt und an die zweite Vorrichtung (2) eine Verbindungsanforderung an einen drahtlosen Zugangspunkt (E3) überträgt;
• die zweite Vorrichtung (2) eine grafische Schnittstelle des Erfassens von Verbindungsdaten der ersten Vorrichtung an einen drahtlosen Zugangspunkt (E4) anzeigt und dann nach dem Erfassen von Verbindungsdaten an einen drahtlosen Zugangspunkt durch einen Benutzer (E5) die erfassten Verbindungsdaten an die erste Vorrichtung (E6) überträgt.

## Claims

1. Control system for playing a data stream comprising:
• a first device (1), called a receiving device, comprising:
- means (10, 16) for receiving the data stream to be played,
- means (13) for transmitting the received data stream through the external output means (11) to a device that is capable of playing the stream,
• a second device (2), called a control device, separate from the first device integrating user interface means (24) for allowing a user to select a data stream to be played and comprising means (24) for, following the selection, by a user, of a stream to be played, transmitting to the first device a command for playing the selected stream, said command containing data for locating the selected stream,
**characterized by** the fact that the second device (2) is designed to decode and play the selected stream and is separate from the device that is capable of playing the stream, and that said command is transmitted following a command from the user for playing said stream on the device that is capable of playing the stream after preview on the second device.

2. System according to Claim 1, in which
• the first device (1) comprises means (14, 15) for setting up a direct wireless connection to the second device (2) and receiving data for connection to a wireless access point (3) and
• the second device (2) comprises means (25) for assisting the connection of the first device to a wireless access point, said means being designed to display a graphical interface for inputting data for connection of the first device to a wireless access point and to transmit said input connection data to the first device.

3. System according to Claim 1, in which the first device (1) comprises decoding means (12) designed to decode the received data stream.

4. System according to Claim 1, in which the user interface means for allowing a user to select a data stream to be played comprise means for displaying graphical interface data.

5. System according to Claim 1, in which said user interface means for allowing a user to select a data stream to be played are designed to access a user interface for selecting content on a remote server.

6. System according to Claim 1, in which, the first and second devices belonging to a local area network managed by a wireless access point, said user interface means for allowing a user to select a data stream to be played are designed to access a file manager on a storage server for the local area network.

7. System according to Claim 1, in which the first device (1) is devoid of user interface means for allowing a user to select a data stream to be played.

8. Receiving device for the system of Claim 1, comprising means (10) for receiving a video data stream to be played, means (11) for external output to a device that is capable of playing the received stream, means (13) for transmitting the received data stream through the output means (11), means (16) for receiving a command for playing a stream, said command containing an address for locating the stream.

9. Receiving device according to Claim 8, **characterized in that** it is devoid of user interface means for allowing a user to select a data stream to be played.

10. A control device for the system of Claim 1, comprising user interface means (24) for allowing a user to select a data stream to be played, means for decoding and playing the selected stream and means (24) for, following the selection, by a user, of a stream to be played, and subsequent to a preview on the control device of the selected stream and to a command from the user for playing the selected stream on a device that is capable of playing the stream, transmitting to another device a command for playing the selected stream, said command containing an address for locating the selected stream.

11. Control device according to Claim 10, in which the user interface means for allowing a user to select a data stream to be played comprise means for displaying graphical interface data.

12. Control method for playing a data stream, comprising
• a step (E14; E34) of selection of a data stream to be played using user interface means,
• a step (E18; E38) of reception of the data stream to be played,
• a step (E19; E39) of transmission of the received data stream to a device that is capable of playing the stream,
• the steps of reception of a data stream to be played and of transmission of the received data stream to a device that is capable of playing said stream are carried out by a first device (1), called a receiving device;
• the step of selection of a data stream to be played is carried out by a second device (2), called a control device, which is separate from the first device,
• and provision is made for a step of transmission (E17; E37) by the second device (2) to the first device (1), following the selection, by a user, of a stream to be played, of a command for playing the selected stream, said command containing data for locating the selected stream,
**characterized by** the fact that
the command is transmitted following preview of the selected stream on the second device, separate from the device that is capable of playing the stream, and a command from the user for playing the selected stream on the device that is capable of playing the stream.

13. Method according to Claim 12, in which
• the first device (1) sets up a direct wireless connection to the second device (E2) and transmits to the second device (2) a request for connection to a wireless access point (E3);
• the second device (2) displays a graphical interface for inputting data for connection of the first device to a wireless access point (E4) and then, following the input of data for connection to a wireless access point by a user (E5), transmits said input connection data to the first device (E6).
